Europäisches Patentamt

**European Patent Office**

**Office européen des brevets**

(11) Publication number: **0 207 019**
A2

# EUROPEAN PATENT APPLICATION

(21) Application number: **86850064.6**

(22) Date of filing: **24.02.86**

(51) Int. Cl.⁴: **B 23 K 35/38**

(30) Priority: **22.05.85 SE 8502524**

(43) Date of publication of application: **30.12.86**
**Bulletin 86/52**

(84) Designated Contracting States: **AT CH DE FR LI NL**

(71) Applicant: **AGA AKTIEBOLAG, S-18181 Lidingö (SE)**

(72) Inventor: **Persson, Kjell-Arne, Lomvägen 629,**
**S-19157 Sollentuna (SE)**
Inventor: **Wattman, Ove, Skördevägen 12, S-17800 Ekerö**
**(SE)**
Inventor: **Sipek, Ladislav, Mantalsvägen 105,**
**S-18339 Täby (SE)**

(74) Representative: **Karlzén, Bengt Erik et al, AGA AB**
**Patent Department, S-181 81 Lidingö (SE)**

(54) **Shielding gas.**

(57) A shielding gas for gas metal arc welding, including short arc welding, spray arc welding and pulsed arc welding, in the first instance in stainless steel, both in steels which are sensitive and in steels which are not sensitive to carburization. The shielding gas comprises Ar, He and $O_2$, the concentration of $O_2$ being in the range of 0.5-1.5 per cent, the concentration of He being in the range of 25-40 per cent and the remainder consisting of Ar.

EP 0 207 019 A2

Case 2322

# SHIELDING GAS

The present invention relates to a shielding gas for gas metal arc welding, including short arc welding, spray arc welding and pulsed arc welding, primarily in high-alloyed, e.g. stainless steels, both in steels that are sensitive to carburization and in steels that are not sensitive to carburization.

In gas metal arc welding, as is known, an electric arc burns between a continuously advanced electrode and the workpiece. The current is transmitted from the power source to the electrode via a contact nozzle. The electrode is advanced by means of an automatic feeding device, melts in the arc and is transported to the melt. A gas which is supplied concentrically around the electrode via a gas nozzle protects the arc, the melt and the weld metal from the injurious influence of the oxygen and nitrogen in the air. This shielding gas also influences the electrode melting process and the transport of energy and material in the arc.

Depending on the current intensity and arc voltage used, the transport of material to the workpiece takes place in the form of relatively large drops which momentaneously short-circuit the arc gap, a process known as short arc welding. There may also be relatively small, non-short-circuiting drops, a process known as spray arc welding. In a certain transitional area these arc types are mixed. By pulsing current or voltage in the short arc mode non-short-curcuiting drops are obtained which is usually known as pulsed arc welding.

The choice of type of shielding gas depends upon which base material is to be melted, among other things. Shielding gases used in gas metal arc welding include both inert gases, mixtures thereof with active, oxidizing gases, or pure carbon dioxide. Special allowance must be made in gas metal arc welding in stainless steels, in which context a distinction is usually made between steels with a low carbon content which are sensitive to carburization and steels which are insensitive to carburization.

A shielding gas often used hitherto for steels sensitive to carburization comprises a mixture of Ar and $O_2$, the concentration of $O_2$ being in the range of 1-3 per cent. For stainless steels that are not sensitive to carburization, a shielding gas has been used hitherto which contains Ar and $CO_2$, the concentration of $CO_2$ lying in the range of 2-5 per cent. A further gas mixture (for non-sensitive steels), more suitable for short arc welding, consists of a mixture of Ar, 33 per cent He, 3 per cent $CO_2$ and 1 per cent $H_2$.

The object of the present invention is to provide a shielding gas mixture that is usable in gas metal arc welding in stainless steel, both for steels which are sensitive to carburization and for steels which are not sensitive to carburization. This shielding gas can be used in both short arc welding, spray arc welding and pulsed arc welding. The invention is mainly characterized in that the shielding gas consists of Ar, He and $O_2$, the concentration of $O_2$ lying in the range of 0.5-1.5 per cent, the concentration of He in the range of 25-40 per cent and the remainder consisting of Ar. A preferred mixture comprises a concentration of $O_2$ in the range of 0.9-1.1 per cent, a concentration of He in the range of 28.5-33 per cent and a remainder which consists of Ar.

The shielding gas according to the invention possesses several advantages in comparison with, for example, those mentioned heretofore.

In comparison with shielding gases Ar + $O_2$ (1-3%) and Ar + $CO_2$ (2-5%) the shielding gas according to the present invention gives a higher welding speed, improved fluidity and wetting of the melt and a greater tolerance in respect of the parameter setting, implying that greater tolerance is permitted in rod protrusion and in voltage. At very low currents, Ar + $O_2$ gas is less suitable for short arc welding, as it can give a high convex weld face and relatively large amounts of oxides. Ar + $CO_2$ gas is used primarily for short arc welding on account of the risk of carburization in the spray arc area. The new gas mixture, in contrast, permits welding with all arc types in all current ranges. Moreover, in short arc welding the new gas gives a significantly better arc stability. With regard to the gas mixture comprising Ar, He (33%), $CO_2$ (3%) and $H_2$ (1%), this is used mostly in short arc welding, mainly on account of the risk of carburization. A change to a spray arc takes place here first at high current intensity. Even here, the gas according to the invention gives a significantly better arc stability and a change to a spray arc takes place at a lower current intensity and also gives no carburization of the material.

By means of the gas mixture of Ar, He and $O_2$ described hereintofore, a shielding gas is thus obtained which can be used for all types of gas metal arc welding with the said benefits. The gas in itself causes no carburization in the weld and also permits so-called positional welding with retained good welding result.

## CLAIMS

0207019

1. A shielding gas intended for gas metal arc welding, including short arc welding, spray arc welding and pulsed arc welding, in the first instance in highly alloyed steels, both in steels which are sensitive and in steels which are not sensitive to carburization, c h a r a c t e r i z e d i n  t h a t  the shielding gas comprises Ar, He and $O_2$, the concentration of $O_2$ being in the range of 0.5-1.5 per cent, the concentration of He being in the range of 25-40 per cent and the remainder consisting of Ar.

2. A shielding gas as claimed in Claim 1, c h a r a c- t e r i z e d  i n  t h a t  the concentration of $O_2$ lies in the range of 0.9-1.1 per cent, the concentration of He in the range of 28.5-33 per cent and the remainder consists of Ar.